# FASCICULE DE BREVET EUROPEEN

(11) **EP 0 430 835 B1**
(45) Date de publication et mention de la délivrance du brevet: **15.02.1995**
(21) Numéro de dépôt: 90440105.6
(22) Date de dépôt: 22.11.1990
(51) Int. Cl.: B60T 17/22, B62J 9/02

(54) **Assortiment de pièces de rechange et d'entretien pour un circuit hydraulique de freinage, et procédé pour remplir un tel circuit**
Zusammenstellung von Ersatz- und Wartungsteilen für ein Flüssigkeitsbremssystem und Verfahren zum Füllen eines solchen Systems
Assortment of spare and maintenance parts for a hydraulic brake circuit and circuit refilling method

(30) Priorité: 22.11.1989 FR 8915533
(43) Date de publication de la demande: 05.06.1991
(73) Titulaire: Ciliento, Felice, F-68790 Morschwiller-le-Bas (FR)
(72) Inventeur: Ciliento, Felice, F-68790 Morschwiller-le-Bas (FR)
(74) Mandataire: Nithardt, Roland

(56) Documents cités:
- FR-A- 2 288 897
- FR-A- 2 608 985
- GB-A- 1 460 891
- US-A- 3 059 671
- US-A- 4 082 163

## Description

La présente invention concerne un assortiment de pièces de rechange et d'entretien pour un circuit hydraulique de freinage d'un véhicule, notamment d'un motocycle, comportant au moins une conduite hydraulique de rechange pourvue de raccords pour son couplage à des organes de raccordement correspondants sur le véhicule.

L'invention concerne également un procédé pour remplir de liquide neuf un circuit hydraulique de freinage d'un motocycle comportant un maître cylindre associé à un réservoir de liquide et au moins un frein pourvu d'un orifice de purge et d'un orifice d'entrée relié au maître-cylindre par le circuit.

Les conduites flexibles des circuits hydrauliques de freinage, appelées souvent "durites" (dénomination commerciale), doivent être remplacées de temps en temps, surtout sur les motocyclettes, où elles sont exposées à l'extérieur et peuvent facilement être endommagées. En outre, les utilisateurs tendent à remplacer les conduites flexibles traditionnelles en matière synthétique par des conduites renforcées par une gaine en acier. C'est pourquoi on trouve dans le commerce des assortiments de pièces de rechange comprenant un jeu de conduites flexibles équipées de raccords appropriés pour un modèle donné de véhicule, éventuellement avec des joints et des vis de passage d'huile allant avec ces raccords.

Toutefois, le remplacement de ces conduites exige ensuite une opération dite de purge du circuit, consistant à évacuer tout l'air pouvant s'y trouver et parfois aussi tous les restes de liquide hydraulique ancien, pouvant contenir de la saleté, de l'eau, etc. Le procédé usuel consiste à vidanger tout le circuit, puis de remplir son réservoir de liquide neuf et chasser ce liquide dans le circuit, jusqu'à des orifices pourvus de vis de purge sur les freins, par pompage au moyen du maître-cylindre actionné par une poignée ou une pédale. Ce procédé est relativement lent et nécessite de pomper du liquide en excédent (qu'il faut récupérer aux vis de purge) afin d'être sûr d'avoir éliminé tous les restes d'air. Souvent deux personnes sont nécessaires pour pomper et récupérer le liquide en même temps.

Afin de permettre à un opérateur seul d'effectuer ces opérations, la demande de brevet français n° 2 608 985 décrit un assortiment comprenant un flacon de remplissage, agencé pour être suspendu au-dessus du réservoir et raccordé à celui-ci pour s'y vider par gravité, et un récipient récepteur agencé pour être raccordé à un purgeur du circuit au moyen d'un tuyau pourvu d'un clapet anti-retour. Toutefois, l'utilisation de ce matériel ne garantit pas l'élimination des bulles d'air dans le circuit, par exemple après qu'on ait remplacé une conduite.

La présente invention vise à éviter les difficultés mentionnées ci-dessus, en fournissant des solutions techniques simples qui permettent de faciliter le remplissage du circuit de freinage par du liquide hydraulique neuf, en particulier lors du remplacement d'une ou plusieurs conduites flexibles du circuit.

Selon un premier aspect, l'invention fournit un assortiment du genre indiqué plus haut, caractérisé en ce qu'il comprend en outre au moins un flacon compressible agencé pour contenir du liquide hydraulique de frein, et des moyens de connexion pour raccorder le flacon au circuit de freinage sur une vis de purge d'au moins un étrier de frein de façon à permettre d'injecter dans le circuit le contenu du flacon et purger simultanément le circuit de freinage.

Dans une forme de réalisation préférée, le flacon est en matière synthétique translucide. De préférence, les moyens de connexion comportent un tuyau souple agencé pour s'emboîter sur une vis de purge d'un étrier de frein. Ils peuvent aussi comporter sur le flacon un embout tubulaire pourvu d'un organe d'obturation amovible ou à percer, ledit embout étant agencé pour être emboîté dans le tuyau souple.

De préférence, l'assortiment comporte plusieurs conduites flexibles de rechange, formant l'ensemble des conduites flexibles du circuit de freinage.

Selon un autre aspect, la présente invention fournit un procédé du genre indiqué plus haut, caractérisé en ce que, après avoir ouvert et vidé au moins partiellement ledit réservoir, on raccorde un flacon contenant le liquide neuf à l'orifice de purge du frein au moyen d'un tuyau souple, puis on injecte ce liquide dans le circuit par l'orifice de purge au moins jusqu'à ce que le liquide atteigne un niveau donné dans le réservoir.

De préférence, le flacon est compressible et l'on injecte le liquide par compression manuelle du flacon.

Une forme préférée du procédé prévoit que, pour vider le réservoir avant d'injecter le liquide neuf, on aspire le liquide qui s'y trouve.

Sur un circuit comportant plusieurs cylindres de frein, donc plusieurs orifices de purge, on raccorde le flacon au moyen d'un tuyau souple successivement à chaque orifice de purge existant dans le circuit et l'on effectue l'injection du liquide dans chacun de ces orifices.

La présente invention et ses avantages seront mieux compris à l'aide de la description suivante d'un exemple de réalisation, en référence aux dessins annexés, dans lesquels :
La figure 1 représente en perspective un circuit de freinage correspondant à la roue avant d'une motocyclette et,
La figure 2 représente en perspective un assortiment de pièces de rechange et d'entretien selon l'invention, prêt à la vente sous un emballage transparent.

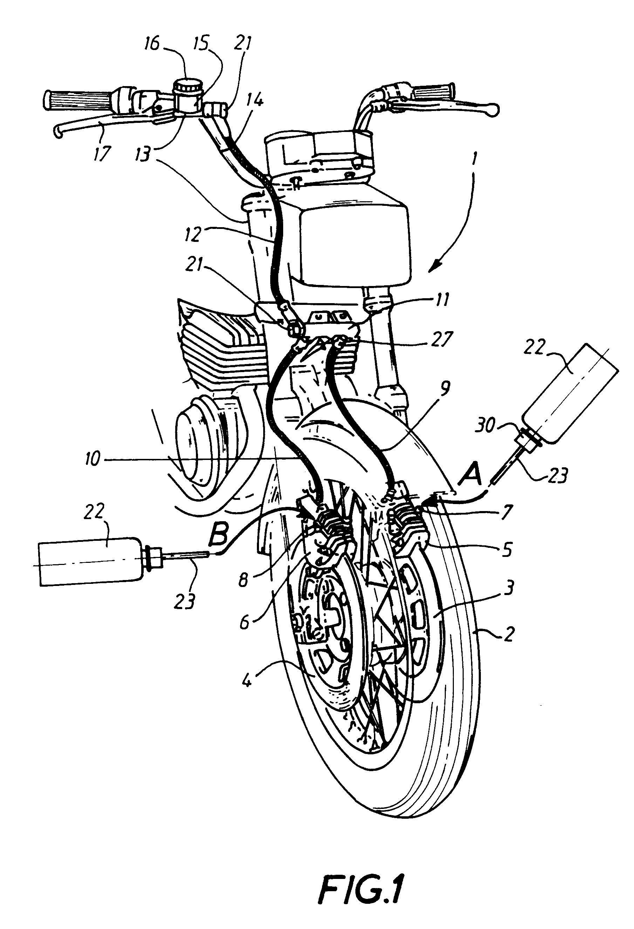

Sur la figure 1, on a représenté l'avant d'une motocyclette 1 dont la roue avant 2 est vue en transparence, pour qu'on voit mieux ses deux freins hydrauliques dont chacun comporte un disque 3,4 et un étrier de frein 5,6. Chaque étrier est équipé d'une vis de purge 7,8 de type connu, ayant un orifice axial de purge qui s'ouvre par desserrage de la vis. Cet orifice communique alors, à l'intérieur de l'étrier 5,6, avec un cylindre pouvant recevoir du liquide sous pression par un orifice d'entrée (non représenté) raccordé à un circuit hydraulique de commande. Ce circuit comprend, pour chaque étrier 5,6, une conduite flexible à pression 9, 10 le reliant à un distributeur 11 fixé au châssis de la motocyclette et relié lui-même par une conduite flexible 12 à un maître-cylindre 13 fixé au guidon 14 de la motocyclette. De manière connue, le maître-cylindre 13 est associe à un réservoir de liquide hydraulique 15 pourvu d'un couvercle 16 et a un levier de commande 17 que le conducteur actionne pour délivrer une pression dans le circuit pour serrer les freins.

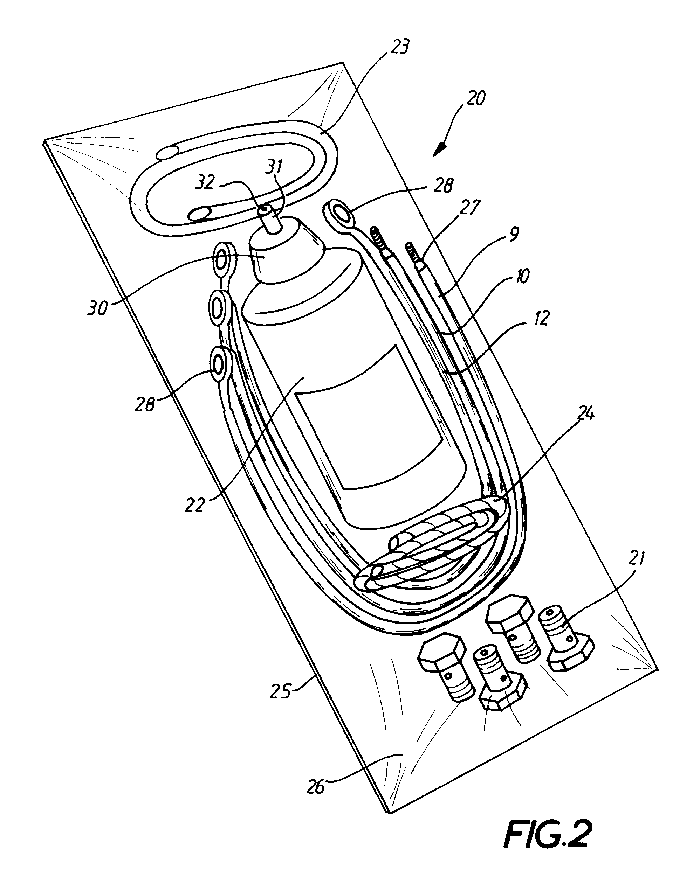

L'assortiment 20 représenté sur la figure 2 est destiné à permettre de remplacer les conduites flexibles 9, 10 et 12 et de remettre ensuite en fonction le circuit de freinage, d'une manière aisée et sûre. A part les conduites 9, 10 et 12, l'assortiment 20 comprend quatre vis de passage d'huile 21 destinées au montage de ces conduites, un flacon jetable 22 contenant du liquide hydraulique en quantité suffisante pour remplir le circuit de freinage, un tuyau souple 23 et une gaine hélicoïdale 24, le tout étant posé sur une feuille de carton 25 et emballé avec elle dans une feuille transparente thermorétractable 26.

Les conduites flexibles 9, 10 et 12 sont pourvues de raccords métalliques à vis 27 ou à oeil 28 grâce auxquels l'utilisateur peut les raccorder facilement aux autres éléments du circuit de freinage. Les raccords à oeil 28 sont fixés au moyen des vis de passage d'huile 21.

Le flacon 22 est en matière synthétique semi-rigide, de sorte qu'il est compressible. De préférence il est translucide pour qu'on voit le niveau de son contenu. Il est muni d'un bouchon vissé 30 pourvu d'un embout tubulaire 31 ayant un trou central 32. Avant l'emploi, le trou 32 peut être obturé de manière étanche par un bouchon ou par un opercule en matière synthétique que l'utilisateur doit percer. L'embout 31 est agencé de façon qu'on puisse emboiter sur lui une extrémité du tuyau souple 23, en obtenant un raccordement étanche grâce à l'élasticité du tuyau. Une gaine hélicoïdale 24 est en outre prévue pour pouvoir être ajustée autour d'une des conduites 9, 10, 12 afin de la protéger contre d'éventuels frottements contre une partie du véhicule.

On utilise l'assortiment 20 de la manière suivante. Après avoir enlevé les anciennes conduites flexibles 9, 10 et 12 ("durites") en dévissant les vis 21 et les raccords filetés 27, on installe à leur place les nouvelles conduites 9, 10, 12, ainsi que les nouvelles vis de passage d'huile 21 s'il le faut. On ouvre le couvercle 16 du réservoir 15 et, si le circuit hydraulique n'a pas été vidangé auparavant, on vide le reservoir en aspirant le liquide à l'aide d'une pipette ou d'un autre instrument. Il s'agit ensuite de remplir le circuit de freinage avec du liquide hydraulique neuf, contenu dans le flacon 22, et de chasser du circuit la totalité de l'air pouvant s'y trouver. On branche une extrémité du tuyau souple 23 au bouchon 30 du flacon 22 et son autre extrémité, comme l'indique la flèche A, à la vis de purge 7 qui est la plus éloignée du maître-cylindre 13. On desserre cette vis de purge pour l'ouvrir et l'on presse doucement le flacon 22, ce qui injecte dans le circuit du liquide neuf qui chasse vers le haut les restes d'ancien liquide et l'air se trouvant dans l'étrier 5, la conduite 9, le distributeur 11, la conduite 12 et le maître-cylindre 13, jusqu'au réservoir 15. Quand le remplissage est correct, on ferme la vis 7, on en retire le tuyau souple 23 et l'on branche celui-ci sur la vis de purge 8 de l'étrier 6, comme indiqué par la flèche B. On procède alors de la même manière que de l'autre côté, ce qui chasse l'air et remplit de liquide neuf l'étrier 6 et la conduite 10. On presse le flacon 22 pour injecter du liquide jusqu'à ce que le réservoir 15 soit remplit au niveau prescrit par le constructeur. On peut ensuite serrer la vis 8 pour la fermer, en débrancher le tuyau 23 et remettre le couvercle 16 du réservoir. Il suffit de pomper un peu de liquide au moyen du levier 17 pour contrôler le bon fonctionnement de la commande des freins.

Un aspect particulièrement intéressant du procédé de remplissage décrit ci-dessus est que l'on remplit le circuit à partir du bas, en faisant sortir le liquide et l'air par le réservoir 15 qui se trouve généralement au point le plus haut du circuit. De cette manière on peut éviter de répandre le liquide hydraulique huileux, si l'on a vidé le réservoir au préalable. Cette vidange du réservoir peut se faire aisément par aspiration au moyen d'un ancien flacon compressible 22, permettant ainsi de recueillir l'ancien liquide pour l'evacuer.

On conçoit qu'un assortiment similaire à l'assortiment 20 peut être prévu pour le circuit de freinage associé à la roue arrière d'une motocyclette ou plus généralement pour un circuit hydraulique de freinage d'un autre type de véhicule, par exemple une voiture.

## Revendications

1. Assortiment de pièces de rechange et d'entretien pour un circuit hydraulique de freinage d'un véhicule, notamment d'un motocycle, comportant au moins une conduite hydraulique de rechange **(9, 10, 12)** pourvue de raccords pour son couplage à des organes de raccordement correspondants sur le véhicule, caractérisé en ce qu'il comprend en outre au moins un flacon compressible **(22)** agencé pour contenir du liquide hydraulique de frein, et des moyens de connexion **(23, 31)** pour raccorder le flacon au circuit de freinage sur une vis de purge **(7, 8)** d'au moins un étrier de frein **(5, 6)** de façon à permettre d'injecter dans le circuit le contenu du flacon et purger simultanément le circuit de freinage.

2. Assortiment selon la revendication 1, caractérisé en ce que le flacon **(22)** est en matière synthétique translucide.

3. Assortiment selon la revendication 1 ou 2, caractérisé en ce que les moyens de connexion comportent un tuyau souple **(23)** agencé pour s'emboîter sur une vis de purge **(7, 8)** d'un étrier de frein **(5, 6)**.

4. Assortiment selon la revendication 3, caractérisé en ce que les moyens de connexion comportent sur le flacon un embout tubulaire **(31)** pourvu d'un organe d'obturation amovible ou à percer, ledit embout étant agencé pour être emboîté dans le tuyau souple **(23)**.

5. Assortiment selon la revendication 1, caractérisé en ce qu'il comporte plusieurs conduites flexibles de rechange **(9, 10, 12)**, formant l'ensemble des conduites flexibles du circuit de freinage.

6. Procédé pour remplir de liquide neuf un circuit hydraulique de freinage d'un motocycle comportant un maître cylindre associé à un réservoir de liquide et au moins un frein pourvu d'un orifice de purge et d'un orifice d'entrée relié au maître-cylindre par le circuit, caractérisé en ce que, après avoir ouvert et vidé au moins partiellement ledit réservoir **(15)**, on raccorde un flacon **(22)** contenant le liquide neuf à l'orifice de purge **(7, 8)** du frein au moyen d'un tuyau souple **(23)**, puis on injecte ce liquide dans le circuit par l'orifice de purge au moins jusqu'à ce que le liquide atteigne un niveau donné dans le réservoir.

7. Procédé selon la revendication 6, caractérisé en ce que le flacon **(22)** est compressible et en ce que l'on injecte le liquide par compression manuelle du flacon.

8. Procédé selon la revendication 6, caractérisé en ce que, pour vider le réservoir **(15)** avant d'injecter le liquide neuf, on aspire le liquide qui s'y trouve.

9. Procédé selon la revendication 6, caractérisé en ce que l'on raccorde le flacon **(22)** au moyen d'un tuyau souple **(23)** successivement à chaque orifice de purge **(7, 8)** existant dans le circuit et l'on effectue l'injection du liquide dans chacun de ces orifices.

## Claims

1. Assortment of spare and maintenance parts of a hydraulic brake circuit of a vehicle, in particular, for a motor cycle comprising at least one spare hydraulic circuit (9, 10, 12) foreseen with connectors for coupling with corresponding connection elements of vehicle, characterised in that it comprises, amongst others, at least one compressible bottle (22) containing the hydraulic brake fluid, as well as connection elements (23, 31) to connect the bottle to the brake circuit via a bleed nipple (7, 8) of at least one brake caliper (5, 6) in order to inject the contents of the bottle into the circuit and bleed the brake circuit at the same time.

2. Assortment according to claim 1, characterised in that the bottle (22) is made of transparent, synthetic material.

3. Assortment according to claim 1 or 2, characterised in that the connection elements comprise a flexible hose (23) which fits onto a bleed nipple (7, 8) of a brake caliper (5, 6).

4. Assortment according to claim 3, characterised in that the connection elements comprise on the bottle a tubular joining piece (31) foreseen with a removable or pierceable seal, the said joining piece being designed to fit into the flexible hose (23).

5. Assortment according to claim 1, characterised in that it comprises several spare flexible hoses (9, 10, 12) for the corresponding flexible hoses of the brake circuit.

6. Process for refilling a hydraulic brake circuit of a motor cycle with fresh brake fluid comprising a master cyclinder associated with a brake fluid resevoir and at least one brake foreseen with a bleed nipple and a supply connection linked with the master cylinder via the brake circuit, characterised in that after opening and bleeding of at least part of the said reservoir (15) one connects a bottle (22) with fresh brake fluid to the bleed nipple (7, 8) by means of a flexible hose (23) and then injects the fluid through the bleed nipple into the circuit until the fluid reaches a given level in the reservoir.

7. Process according to claim 6, characterised in that the bottle (22) is compressible and the fluid is injected into the circuit by exercising a manual pressure on the bottle.

8. Process according to claim 6, characterised in that for emptying the reservoir (15) before injection of the fresh brake fluid, the old brake fluid is evacuated.

9. Process according to claim 6, characterised in that one connects the bottle (22) by means of a flexible hose (23) to each bleed nipple (7,8) in the circuit successively and injects the fluid into each of these nipples.

## Patentansprüche

1. Zusammenstellung von Ersatz- und Wartungsteilen für das Flüssigkeitsbremssystem eines Fahrzeugs, insbesondere eines Motorrades, mit mindestens einer Ersatzflüssigkeitsleitung (9, 10,12), die mit Anschlüssen für die Ankopplung an die entsprechenden Anschlussvorrichtungen am Fahrzeug versehen ist, gekennzeichnet dadurch, dass sie ausserdem mindestens eine pressbare Flasche (22) für Bremsflüssigkeit enthält, sowie Anschlüsse (23,31) um die Flasche über die Entlüftungsschraube (7,8) mindestens eines Bremssattels an den Bremskreis anzuschliessen, um den Inhalt der Flasche in den Kreis einzuspritzen und gleichzeitig den Bremskreis zu entlüften.

2. Zusammenstellung gemäss Anspruch 1, gekennzeichnet dadurch, dass die Flasche (22) aus durchscheinendem Synthetikmaterial besteht.

3. Zusammenstellung gemäss Anspruch 1 oder 2, gekennzeichnet dadurch, dass die Anschlussvorrichtungen einen flexiblen Schlauch (23) enthalten, der sich auf die Entlüftungssschraube (7,8) eines Bremssattels (5,6) stecken lässt.

4. Zusammenstellung gemäss Anspruch 3, gekennzeichnet dadurch, dass die Anschlussvorrichtungen an der Flasche einen röhrenförmigen Ansatz (31) enthalten, der mit einer abnehmbaren oder durchstechbaren Verschlussvorrichtung versehen ist, wobei der besagte Ansatz in den flexiblem Schlauch (23) eingesteckt werden kann.

5. Zusammenstellung gemäss Anspruch 1, gekennzeichnet dadurch, dass sie mehrere flexible Ersatzschläuche (9,10,12) enthält, die den gesamten flexiblen Schläuchen des Bremskreises entsprechen.

6. Verfahren zum Füllen des hydraulischen Bremskreises eines Motorrades mit frischer Bremsflüssigkeit, bestehend aus einem Hauptzylinder in Verbindung mit einem Flüssigkeitstank und mindestens einer Bremse mit Entlüftungsöffnung und Zufuhröffnung, die mit dem Hauptzylinder durch den Kreis verbunden sind, gekennzeichnet dadurch, dass nach Öffnung und mindestens teilweiser Leerung des besagten Tanks (15), man eine Flasche (22) mit frischer Bremsflüssigkeit an die Entlüftungsöffnung (7, 8) der Bremse mittels eines flexiblen Schlauches (23) anschliesst und dann die Flüssigkeit durch die Entlüftungsöffnung in den Kreis einspritzt, bis diese Flüssigkeit mindestens einen gegebenen Stand im Tank erreicht.

7. Verfahren gemäss Anspruch 6, gekennzeichnet dadurch, dass die Flasche (22) zusammenpressbar ist und man so die Flüssigkeit durch manuellen Druck auf die Flasche einspritzt.

8. Verfahren gemäss Anspruch 6, gekennzeichnet dadurch, dass man, um den Tank (15) vor Einspritzen der neuen Bremsflüssigkeit zu leeren, die darin befindliche Flüssigkeit absaugt.

9. Verfahren gemäss Anspruch 6, gekennzeichnet dadurch, dass man die Flasche (22) mittels eines flexiblen Schlauches (23) nacheinander an jede Entlüftungssöffnung (7,8) im Kreis anschliesst und die Flüssigkeit in jede dieser Öffnungen einspritzt.
